# EUROPEAN PATENT APPLICATION

(11) **EP 4 531 157 A1**
(43) Date of publication of application: **02.04.2025**
(21) Application number: 23941825.4
(22) Date of filing: 04.07.2023
(51) Int. Cl.: H01M 10/0562, H01M 10/054, H01M 10/056

(54) **SOLID-STATE ELECTROLYTE MATERIAL, SOLID-STATE ELECTROLYTE AND POSITIVE ELECTRODE MATERIAL AND PREPARATION METHODS THEREFOR, AND SODIUM-ION BATTERY**

(30) Priority: 29.06.2023 CN 202310788122
(71) Applicant: Beijing Easpring Material Technology Co., Ltd., Beijing 100160 (CN); Easpring Technology (Changzhou) New Material Co., Ltd, Jintan District Changzhou, Jiangsu 213200 (CN)
(72) Inventor: REN, Quan, Beijing 100160 (CN); LIU, Yafei, Beijing 100160 (CN); CHEN, Yanbin, Beijing 100160 (CN)
(74) Representative: Nederlandsch Octrooibureau
(86) International application number: PCT/CN2023/105742
(87) International publication number: WO 2025/000576

(57) **Abstract**

The present application relates to the field of sodium-ion batteries and discloses a solid electrolyte material, a solid electrolyte, a cathode material and a preparation method thereof, and a sodium-ion battery. A ratio of a peak intensity I(₀₂₀) of a (020) crystal plane to a peak intensity I(₄₂₁) of a (421) crystal plane obtained by X-ray Diffraction (XRD) of the solid electrolyte material satisfies 0.9≤I(₀₂₀)/I(₄₂₁)<1. A ratio of a peak area A(₀₂₀) of the (020) crystal plane to a peak area A(₄₂₁) of the (421) crystal plane obtained by XRD of the solid electrolyte material satisfies 0.45≤A₍₀₂₀₎/A₍₄₂₁₎<1. The solid electrolyte material has good crystallinity, high ionic conductivity, and good structural stability. The cathode material made from the solid electrolyte material has high capacity and excellent rate, cycle, and thermal stability.

## Description

### CROSS-REFERENCE TO RELATED APPLICATIONS

This application claims the benefit of Chinese patent application No. 202310788122.0 filed on June 29, 2023, the contents of which are incorporated herein by reference.

### FIELD

The present disclosure relates to the field of sodium-ion batteries, and more particularly, to a solid electrolyte material, a solid electrolyte, a cathode material and a preparation method thereof, and a sodium-ion battery.

### BACKGROUND

Lithium-ion secondary batteries have the advantages such as high specific energy density, wide operating temperature range, long charge and discharge life, insignificant self-discharge, and less memory effect, and lithium-ion secondary batteries may have a mass energy density thereof as high as 270 Wh/kg. Thus, the lithium-ion secondary batteries are considered to be the most promising chemical power source. Since the lithium-ion secondary batteries are commercialized by Sony in 1990, they have not only been dominant in the field of small mobile consumer electronics such as laptops, mobile phones, camcorders, digital cameras, MP3s, etc., but they have also exhibited remarkable development prospects in the fields of power batteries and energy storage batteries in recent years.

However, lithium resources on the earth are not abundant. The abundance of lithium in the earth's crust is only 0.0065%, and distribution of lithium is uneven. With the arrival of the era of electric vehicles and smart grids in the future, the lithium resources will be inevitably limited in terms of their development due to the important factors such as shortages and high costs of the lithium resources. Therefore, it is urgent to develop new energy storage battery systems. The abundance of sodium in the earth's crust may reach 2.64%, and thus sodium is low in cost. Further, sodium ions have a similar intercalation mechanism to lithium ions. Therefore, sodium-ion secondary batteries have attracted renewed attention in recent years.

However, currently, most of the reported studies on the sodium batteries are based on liquid electrolytes of organic solvents such as ether and carbonate. The organic solvents are flammable and prone to leakage, and thus there are potential safety concerns on the liquid sodium batteries. In contrast, solid sodium batteries have the advantages of high stability, no risk of leakage, and easy direct stacking and processing, which significantly improves safety performances of the batteries.

In the solid battery system, one of the most critical materials at present is a solid electrolyte. The solid electrolyte includes organic polymers, sulfides, halides, perovskite type, NASICON type, garnet type, and other types. The NASICON solid electrolyte has the advantages such as high conductivity, good thermal stability, and wide electrochemical window, and thus it has become one of the solid electrolytes with the most potential for industrialization.

A theoretical ionic conductivity of the NASICON solid electrolyte may be higher than 10⁻³ S/cm. However, the data thereof reported in current research are generally lower than 0.5×10⁻³ S/cm. Therefore, there is still a lot of room for improvement in the ionic conductivity of the NASICON solid electrolyte. The practical application of the NASICON solid electrolyte is limited due to the problems such as poor compatibility. Further, the nanonized NASICON solid electrolyte has the problems such as structural instability and prone to phase separation, which is not conducive to long-term preservation of nano-slurries. In addition, in order to effectively improve its ionic conductivity, more researchers used wet chemical reaction methods such as hydrothermal method and sol-gel method to improve its performance. Thus, it cannot be produced in a large scale at low cost, and the conventional solid-phase reactions are very likely to cause formation of impurities due to uneven mixing of raw materials. On the other hand, a residual sodium content on the surface of mainstream layered sodium cathode materials on the market is too high, which affects diffusion and transmission of the sodium ions, destroys structure of the materials, and leads to reduced cycle life and energy efficiency and poor safety of the batteries.

### SUMMARY

An object of the present disclosure is to overcome the problem that the existing solid electrolyte materials still have a low ion conductivity and poor structural stability.

In order to achieve the above-mentioned object, a first aspect of the present disclosure provides a solid electrolyte material. A ratio of a peak intensity I(₀₂₀) of a (020) crystal plane to a peak intensity I(₄₂₁) of a (421) crystal plane obtained by X-ray Diffraction (XRD) of the solid electrolyte material satisfies 0.9≤I(₀₂₀)/I(₄₂₁)<1. A ratio of a peak area A(₀₂₀) of the (020) crystal plane to a peak area A(₄₂₁) of the (421) crystal plane obtained by XRD of the solid electrolyte material satisfies 0.45≤A(₀₂₀)/A(₄₂₁)<1.

A second aspect of the present disclosure provides a method for preparing the solid electrolyte material according to the first aspect. The method includes: (1) mixing a Na source, a Zr source, a Si source, and a P source in the presence of a solvent, to obtain a mixed material A, optionally, the mixed material A further containing an M¹ source and/or an M² source; (2) heating a mixed material B for polymerization reaction, to obtain a precursor I of the solid electrolyte, the mixed material B containing the mixed material A, an organic monomer, an initiator, and a catalyst; (3) sequentially performing a pre-sintering treatment and a crushing treatment on the precursor I of the solid electrolyte, to obtain a precursor II of the solid electrolyte; and (4) sequentially performing a sintering treatment and a crushing treatment on the precursor II of the solid electrolyte.

A third aspect of the present disclosure provides a solid electrolyte. The solid electrolyte includes the solid electrolyte material according to the first aspect, a polymer, and a sodium salt.

A fourth aspect of the present disclosure provides a method for preparing the solid electrolyte according to the third aspect. The method includes: (a) obtaining a mixture by kneading a solid electrolyte material, a polymer, and a sodium salt; and (b) performing a heat pressing treatment on the mixture.

A fifth aspect of the present disclosure provides a cathode material. The cathode material includes a cathode active substance and a solid electrolyte material coated on a surface of the cathode active substance. The solid electrolyte material is the solid electrolyte material according to the first aspect.

A sixth aspect of the present disclosure provides a method for preparing the cathode material according to the fifth aspect. The method includes: performing a heat treatment on a mixed material containing a solid electrolyte material and a cathode active substance at a temperature ranging from 300°C to 750°C. The solid electrolyte material is the solid electrolyte material according to the first aspect.

A seventh aspect of the present disclosure provides a sodium-ion battery. The sodium-ion battery includes the solid electrolyte material according to the first aspect or the cathode material according to the fifth aspect.

Based on the above-mentioned technical solutions, the present disclosure has the following advantages.
(1) For the solid electrolyte material according to the present disclosure, the ratio of the peak intensity I(₀₂₀) of the (020) crystal plane to the peak intensity I(₄₂₁) of the (421) crystal plane obtained by XRD satisfies 0.9≤I(₀₂₀)/I(₄₂₁)<1; and the ratio of the peak area A(₀₂₀) of the (020) crystal plane to the peak area A(₄₂₁) of the (421) crystal plane obtained by XRD thereof satisfies 0.45≤A(₀₂₀)/A(₄₂₁)<1. When the peak intensity ratio and the peak area ratio of the (020) crystal plane to the (421) crystal plane of the solid electrolyte material are within the above-mentioned specific ranges, the solid electrolyte material can have a good crystallinity. In this way, it can be ensured that the prepared solid electrolyte material has a highly dense microscopic morphology, is free of pores and microcracks, and has a monoclinic phase structure, thereby enhancing the ionic conductivity thereof. Preferably, by element doping the solid electrolyte material, a sintering temperature of the material can be reduced, while improving the stability and ionic conductivity of the material.
(2) In the method for preparing the solid electrolyte material according to the present disclosure, doping elements are introduced during the mixing process, enabling elements and the main phase to be uniformly mixing at an atomic level; in combination with the subsequent polymerization reaction of the mixed material A with the organic monomer, as well as the pre-sintering treatment, the sintering treatment, and the crushing treatment, and preferably, by adjusting values of x, y, and z to control contents of Na, Zr, Si, P, and the doping elements, by adjusting process conditions of a dry preparation process, the lattice constant can be comprehensively regulated, the prepared solid electrolyte material has a uniform composition, high ionic conductivity, and an average particle size thereof can be nanoscale. Further, the presence of the doping elements inside the lattice ensures that the solid electrolyte material has excellent structural stability, and the nanoscale slurry thereof may maintain a pure phase state for a long time without phase decomposition. In addition, the prepared nanoscale solid electrolyte slurry and powder have a high specific surface area and a strong specific surface energy. In another aspect, the method has the advantages such as easy availability of raw materials, low cost, simple preparation method, and easy industrial large-scale production.
(3) In the cathode material according to the present disclosure, the solid electrolyte material is coated and evenly distributed on the surface of the cathode active substance. Preferably, the cathode material is subjected to an acid-base titration treatment, and a relatively obvious characteristic titration peak appears in the pH ranging from 5 to 8, indicating that the coating of NASICON solid electrolyte material can broaden diffusion channels of sodium ions, allowing the cathode material to have a higher capacity and excellent rate capability, cycle and thermal stability.
(4) In the method for preparing the cathode material according to the present disclosure, by coating the NASICON solid electrolyte material on the surface of the cathode active substance, the residual sodium on the surface of the cathode active substance can be consumed. At the same time, the NASICON solid electrolyte material has three-dimensional sodium ion diffusion channels, which may be widened after coating, thereby improving the electrochemical performances of sodium-ion batteries. Further, the NASICON solid electrolyte material with a stable structure has excellent thermal stability, which can improve the safety of the cathode material.

### BRIEF DESCRIPTION OF THE DRAWINGS

FIG. 1 illustrates XRD patterns of solid electrolyte materials prepared in preparation examples and a comparative preparation example; and
FIG. 2 illustrates XRD patterns of solid electrolyte materials prepared in preparation examples and comparative preparation examples after abuse testing.

### DETAILED DESCRIPTION

The endpoints of the ranges and any values disclosed herein shall not limited to the exact range or value, and those ranges or values should be understood to include values close to those ranges or values. For numerical ranges, endpoints of the respective ranges, an endpoint of respective ranges and an individual point value, and individual point values may be combined with each other to obtain one or more new numerical ranges, which should be deemed to be specifically disclosed herein.

In the present disclosure, unless otherwise specified, the room temperature and normal temperature refer to 25±2°C.

In the present disclosure, unless otherwise specified, the term "optionally" used means performing or not performing an operation, or adding or not adding a material.

As mentioned above, a first aspect of the present disclosure provides a solid electrolyte material. A ratio of a peak intensity I(₀₂₀) of a (020) crystal plane to a peak intensity I(₄₂₁) of a (421) crystal plane obtained by XRD of the solid electrolyte material satisfies 0.9≤I(₀₂₀)/I(₄₂₁)<1. A ratio of a peak area A(₀₂₀) of the (020) crystal plane to a peak area A(₄₂₁) of the (421) crystal plane obtained by XRD of the solid electrolyte material satisfies 0.45≤A(₀₂₀)/A(₄₂₁)<1.

The inventors found in the research that, for the NASICON solid electrolyte material, when the peak intensity and peak area of the (020) crystal plane obtained by XRD, as well as the peak intensity and peak area of the (421) crystal plane obtained by XRD satisfy the above-mentioned requirements, the crystal structure thereof can be regulated, and the peak intensity and the peak area exhibit suitable crystallinity and good structural stability. In addition, bond lengths of oxygen atoms are changed, which weakens interaction between Na and O, thereby reducing migration potential energy of carriers and increasing concentration of the carriers. In this way, the ionic conductivity of the NASICON solid electrolyte material can be enhanced.

According to some embodiments of the present disclosure, preferably, 0.97≤I₍₀₂₀₎/I₍₄₂₁₎<1.

According to some embodiments of the present disclosure, preferably, 0.46≤A₍₀₂₀₎/A₍₄₂₁₎<1.

The use of the above-mentioned preferred embodiments is conducive to further improving the ionic conductivity and the structural stability of the solid electrolyte material.

According to some embodiments of the present disclosure, preferably, the solid electrolyte material has a structure represented by Formula I:

Na_{*3*+*x*}[Zr*_{2-y}*M¹*_{y}*][Si*_{2-z}*M²*_{z}*]PO₁₂ Formula I,

where: 0*≤x*<1.15, 0≤*y*≤0.5*,* 0≤*z*≤1; M¹ is at least one of Mg, La, Y, Al, and Ca; and M² is at least one of Ga, In, Ge, and Sc.

According to some embodiments of the present disclosure, preferably, the solid electrolyte material has an average particle size D₅₀ ranging from 5 nm to 500 nm, and preferably, from 100 nm to 200 nm. The nanoscale slurry of the solid electrolyte material can be left standing for a long time without precipitation, phase decomposition, and the like.

According to some embodiments of the present disclosure, preferably, the solid electrolyte material has an ionic conductivity greater than 8×10⁻⁵ S/cm, and preferably, greater than 1×10⁻⁴ S/cm.

A second aspect of the present disclosure provides a method for preparing the solid electrolyte material according to the first aspect. The method includes: (1) mixing a Na source, a Zr source, a Si source, and a P source in the presence of a solvent, to obtain a mixed material A, optionally, the mixed material A further containing an M¹ source and/or an M² source; (2) heating a mixed material B for polymerization reaction, to obtain a precursor I of the solid electrolyte, the mixed material B containing the mixed material A, an organic monomer, an initiator, and a catalyst; (3) sequentially performing a pre-sintering treatment and a crushing treatment on the precursor I of the solid electrolyte, to obtain a precursor II of the solid electrolyte; and (4) sequentially performing a sintering treatment and a crushing treatment on the precursor II of the solid electrolyte.

According to some embodiments of the present disclosure, preferably, in step (1), the solvent is selected from at least one of water, N-methyl-2-pyrrolidone, phthalate ester, dibasic ester, long-chain alcohol, and pyrrolidone, and preferably, water.

According to some embodiments of the present disclosure, preferably, in step (1), the Na source is selected from at least one of an oxide, a hydroxide, a nitrate, an oxalate, an organic alcoholate, and a carbonate that contain Na, and preferably, the Na source is sodium carbonate.

According to some embodiments of the present disclosure, preferably, in step (1), the Zr source is selected from at least one of an oxide, a hydroxide, a nitrate, an oxalate, an organic alcoholate, and a carbonate that contain Zr; preferably, the Zr source is at least one of ZrO₂, zirconium silicate, and zirconium tetrachloride; and more preferably, the Zr source is ZrO₂.

According to some embodiments of the present disclosure, preferably, in step (1), the Si source is selected from at least one of an oxide, a hydroxide, a nitrate, an oxalate, an organic alcoholate, and a carbonate that contain Si; preferably, the Si source is at least one of SiO₂, sodium silicate, and silicon carbide; and more preferably, the Zr source is SiO₂.

According to some embodiments of the present disclosure, preferably, in step (1), the P source is at least one of NH₄H₂PO₄, sodium dihydrogen phosphate, and phosphoric acid, and preferably, the P source is NH₄H₂PO₄.

According to some embodiments of the present disclosure, preferably, in step (1), the M¹ source and the M² source are each independently selected from at least one of an oxide, a hydroxide, a nitrate, an oxalate, an organic alcoholate, and a carbonate that contain M¹ and/or M²; preferably, the M¹ source is Y₂O₃ and/or La₂O₃, and preferably, the M² source is at least one of Sc₂O₃, Ga₂O₃, and GeO₂.

According to some embodiments of the present disclosure, preferably, in step (1), a ratio n(Na)/n(Si) of a molar amount of Na in the Na source to a molar amount of Si in the Si source ranges from 1.65 to 1.725; when the mixed material A further contains an M² source, a ratio n(Na)/[n(Si)+n(M²)] of the molar amount of Na in the Na source to a sum of the molar amount of Si in the Si source and a molar amount of M² in the M² source ranges from 1.65 to 1.725.

According to some embodiments of the present disclosure, preferably, in step (1), the amounts of the Na source, the Zr source, the Si source, the P source, the M¹ source, and the M² source enable the obtained solid electrolyte material to have a structure represented by Formula I. The specific structure is described above and will not be repeated here. The molar amounts of the Zr source, the Si source, the P source, the M¹ source, and the M² source satisfy the stoichiometric ratio of the structure represented by Formula I.

According to some embodiments of the present disclosure, preferably, in step (1), the mixed material A has a solid content ranging from 40 wt% to 60 wt% at 25°C.

According to some embodiments of the present disclosure, preferably, in step (1), said mixing may be performed in a conventional device having the functions of mixing and/or crushing, which is not specifically limited. For example, said mixing may be performed in a planetary ball mill or a high-energy ball mill.

According to some embodiments of the present disclosure, preferably, in step (2), the organic monomer is selected from at least one of acrylamide (AM), methylenebisacrylamide (MBAM), styrene, butadiene, and methyl methacrylate, and preferably, acrylamide.

According to some embodiments of the present disclosure, preferably, in step (2), the initiator is selected from at least one of benzoyl peroxide, (NH₄)₂S₂O_{8,} and K₂S₂O₈, and preferably, (NH₄)₂S₂O₈.

According to some embodiments of the present disclosure, preferably, in step (2), the catalyst is N,N,N',N'-tetramethylethylenediamine (TEMED).

According to some embodiments of the present disclosure, preferably, in step (2), a mass ratio of the mixed material A to the organic monomer is 1: (0.5 to 0.6).

According to some embodiments of the present disclosure, preferably, in step (2), a mass ratio of the organic monomer, the initiator, and the catalyst is 1: (0.5 to 1.5): (0.5 to 1.5).

According to some embodiments of the present disclosure, preferably, in step (2), conditions of the polymerization reaction include: a polymerization temperature ranging from 80°C to 200°C and a polymerization duration ranging from 10 hours to 15 hours.

According to some embodiments of the present disclosure, preferably, in step (3), conditions of the pre-sintering treatment include: a pre-sintering temperature ranging from 300°C to 700°C and a pre-sintering duration ranging from 2 hours to 6 hours.

According to some embodiments of the present disclosure, preferably, in step (3), the precursor II of the solid electrolyte has an average particle size D₅₀ ranging from 1 µm to 50 µm, and preferably, from 40 µm to 50 µm.

According to some embodiments of the present disclosure, preferably, in step (4), conditions of the sintering treatment include: a sintering temperature ranging from 1,000°C to 1,200°C and a sintering duration ranging from 4 hours to 10 hours. The use of the above-mentioned preferred embodiment facilitates the synthesis of a monoclinic solid electrolyte material.

According to some embodiments of the present disclosure, preferably, the method further includes: performing, in the presence of water, a nanometerization on a product obtained by the crushing treatment in step (4), to obtain a nanoscale solid electrolyte material. The use of the above-mentioned preferred embodiment is conducive to obtaining a nanoscale solid electrolyte material, which has an average particle size D₅₀ satisfying the above-mentioned requirements.

Preferably, the nanometerization includes: sanding, in the presence of water, the product obtained by the crushing treatment in step (4), to obtain a nanoscale slurry, the nanoscale slurry having a solid content at 25°C ranging from 40 wt% to 60 wt%; then drying the nanoscale slurry and grinding the dried product. Preferably, conditions of said sanding include: a rotation speed ranging from 800 r/min to 1,200 r/min and a duration ranging from 1 hour to 3 hours. Preferably, said drying is at least one of blast drying, vacuum drying, and freeze drying, and conditions of said drying include a temperature ranging from 25°C to 60°C and a duration ranging from 8 hours to 12 hours. Said grinding is performed using an airflow mill.

A third aspect of the present disclosure provides a solid electrolyte. The solid electrolyte includes the solid electrolyte material according to the first aspect, a polymer, and a sodium salt.

According to some embodiments of the present disclosure, preferably, the polymer is selected from at least one of polyvinylidene fluoride, polytetrafluoroethylene, vinylidene fluoride-hexafluoropropylene copolymer, polyethylene oxide, polydimethylsiloxane, polymethyl methacrylate, polypropylene carbonate, polyvinyl carbonate, and polycaprolactone, and preferably, polyethylene oxide (PEO).

According to some embodiments of the present disclosure, preferably, the sodium salt is selected from at least one of sodium bis(trifluoromethanesulfonyl)imide (NaTFSI), sodium hexafluorophosphate, sodium perchlorate, and sodium trifluoromethanesulfonate, and preferably, NaTFSI.

According to some embodiments of the present disclosure, preferably, based on a total mass of the solid electrolyte, a content of the solid electrolyte material ranges from 5 wt% to 30 wt%, a content of the polymer ranges from 50 wt% to 75wt%, and a content of the sodium salt ranges from 15 wt% to 30wt%.

According to some embodiments of the present disclosure, preferably, the solid electrolyte has a membrane structure. The membrane structure has a thickness ranging from 5 µm to 200 µm, and preferably, from 20 µm to 100 µm.

A fourth aspect of the present disclosure provides a method for preparing the solid electrolyte according to the third aspect. The method includes: (a) obtaining a mixture by kneading a solid electrolyte material, a polymer, and a sodium salt; and (b) performing a heat pressing treatment on the mixture.

According to some embodiments of the present disclosure, preferably, conditions of the kneading in step (a) include: a kneading temperature ranging from 0.5 Tₘ to 1.5 Tₘ, where Tₘ represents a softening temperature of the polymer; a rotation speed ranging from 300 rpm to 500 rpm; and the kneading is performed for a duration until a torque of the kneading machine reaches a steady state.

According to some embodiments of the present disclosure, preferably, conditions of the heat pressing treatment in step (b) include: a heat pressing temperature ranging from 60°C to 80°C, a heat pressing pressure ranging from 1 MPa to 10 MPa, and a heat pressing duration ranging from 5 minutes to 20 minutes. The heat pressing pressure may be adjusted based on the required thickness of the solid electrolyte membrane. The device used for the heat pressing treatment is not specifically limited. For example, the device may be at least one selected from a flat plate heat press, a roller heat press, and an impulse heat press.

According to some embodiments of the present disclosure, preferably, the method further includes: drying the heat pressed product obtained by the heat pressing treatment in step (b). Conditions of said drying include: a drying temperature ranging from 60°C to 120°C and a drying duration ranging from 4 hours to 24 hours.

A fifth aspect of the present disclosure provides a cathode material. The cathode material includes a cathode active substance and a solid electrolyte material coated on a surface of the cathode active substance. The solid electrolyte material is the solid electrolyte material according to the first aspect.

According to some embodiments of the present disclosure, preferably, a mass ratio of the solid electrolyte material to the cathode active substance is (0.05 to 1): 100, and preferably, (0.5 to 0.8): 100.

According to some embodiments of the present disclosure, preferably, the cathode active substance is at least one of NaNi_{1/3}Fe_{1/3}Mn_{1/3}O₂, Na_{2/3}Ni_{1/3}Mn_{1/2}O₂, and a layered oxide cathode material derived therefrom. The layered oxide cathode material derived therefrom is a layered oxide cathode material obtained by performing element doping and/or adjustment of element ratio on NaNi_{1/3}Fe_{1/3}Mn_{1/3}O₂ and/or Na_{2/3}Ni_{1/3}Mn_{1/2}O₂. For example, the layered oxide cathode material derived therefrom includes, but not limited to, at least one of Na_{0.45}Ni_{0.22}Co_{0.11}Mn_{0.66}O₂, Na[Ni_{0.25}Fe_{0.5}Mn_{0.25}]O₂, and NaNi_{0.25}Fe_{0.25}Co_{0.25}Mn_{0.25}O₂.

According to some embodiments of the present disclosure, preferably, the cathode material has a characteristic titration peak at pH ranging from 5 to 8 during an acid-base titration treatment. This indicates that the solid electrolyte material according to the present disclosure generates Na₃PO₄ at the interface with the cathode active substance during the coating process. Na₃PO₄, as a fast ion conductor, can serve as a buffer layer to balance a potential difference between the NASICON solid electrolyte material and the cathode active substance, thereby inhibiting the generation of a space charge layer and reducing an interface impedance. In this way, the cathode materials can well exert the electrochemical performances thereof.

According to some embodiments of the present disclosure, preferably, in a differential scanning calorimetry analysis spectrum of the cathode material, an onset temperature of a main exothermic peak is greater than or equal to 290°C. The onset temperature of the main exothermic peak of the cathode material is significantly rearward shifted, indicating that the thermal stability of the obtained cathode material can be improved by coating the solid electrolyte material according to the present disclosure on the surface of the cathode active substance.

The structural stability of the cathode material can be improved, the problem of oxygen evolution under high sodium desorption conditions can be inhibited, and the side reactions between the cathode material and the electrolyte under high voltage conditions can be alleviated, thereby improving the electrochemical performance and safety of the sodium-ion battery.

A sixth aspect of the present disclosure provides a method for preparing the cathode material according to the fifth aspect. The method includes: performing a heat treatment on a mixed material containing a solid electrolyte material and a cathode active substance at a temperature ranging from 300°C to 750°C. The solid electrolyte material is the solid electrolyte material according to the first aspect.

According to some embodiments of the present disclosure, preferably, the mixed material is obtained by mixing a solid electrolyte material and a cathode active substance in a mixing device. The mixing device may be, for example, a conventional dry mixing device such as a ball mill, a high-speed mixer, a vertical mixer, a horizontal mixer, an inclined mixer, etc., which is not specifically limited herein. Preferably, the heating device for the heat treatment may be a conventional sintering and heat treatment device such as a tubular furnace, an oxygen furnace, a muffle furnace, a roller kiln, etc., which is not specifically limited herein.

According to some embodiments of the present disclosure, preferably, the temperature of the heat treatment ranges from 400°C to 750°C; and preferably, a duration of the heat treatment ranges from 2 hours to 12 hours, and preferably, from 5 hours to 12 hours.

A seventh aspect of the present disclosure provides a sodium-ion battery. The sodium-ion battery includes the solid electrolyte material according to the first aspect or the cathode material according to the fifth aspect.

The present disclosure will be described in detail below by means of examples.

In the following examples and comparative examples, unless otherwise specified, the raw materials used are all commercially available products.

In the following examples and comparative examples: phase and crystal structure analysis of the materials were performed using an X-ray automatic diffractometer manufactured by Rigaku, Japan; particle size distribution test was performed using a Mastersizer 2000 laser particle size analyzer from Malvern Panalytical, and only the average particle size D₅₀ of the material was characterized in the test; charge and discharge and cycle tests of button batteries were performed using CT-3008 from NEWARE TECHNOLOGY LIMITED; and alternating-current impedance test and electrochemical window test were performed using an SP-150 electrochemical workstation produced by BioLogic, France.

Preparation Examples are provided to explain the solid electrolyte material and the method for preparing the solid electrolyte material according to the present disclosure.

### Preparation Example 1

(1) In the presence of a solvent, a Na source, a Zr source, a Si source, and a P source were mixed to obtain a mixed material A. The solvent was water. The Na source was Na₂CO₃. The Zr source was ZrO₂. The Si source was SiO₂. The P source was NH₄H₂PO₄. A ratio n(Na)/n(Si) of a molar amount of Na in the Na source to a molar amount of Si in the Si source was 1.65. Said mixing was performed in a ball mill mixer, and conditions of said mixing included: a rotation speed of 900 rpm and a duration of 6 hours. A solid content of the mixed material A at 25°C was 50wt%.
(2) A mixed material B containing the mixed material A, an organic monomer, an initiator, and a catalyst was heated for polymerization reaction, to obtain a precursor I of the solid electrolyte. The organic monomer was acrylamide. The initiator was (NH₄)₂S₂O₈. The catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven. The conditions of the polymerization reaction included: a polymerization temperature of 100°C and a polymerization duration of 12 hours.
(3) A pre-sintering treatment and a crushing treatment were performed on the precursor I of the solid electrolyte sequentially, to obtain a precursor II of the solid electrolyte. The pre-sintering treatment was performed in a muffle furnace, and conditions of the pre-sintering included: a pre-sintering temperature of 500°C and a pre-sintering duration of 2 hours. The crushing treatment was performed in a wall breaker. The precursor II of the solid electrolyte had an average particle size D₅₀ of 48 µm.
(4) A sintering treatment and a crushing treatment were performed on the precursor II of the solid electrolyte sequentially, to obtain a micron-sized solid electrolyte material with an average particle size D₅₀ of 13 µm and a chemical formula of Na₃Zr₂Si₂PO₁₂. The sintering treatment was performed in a muffle furnace, and conditions of the sintering treatment included: a sintering temperature of 1,050°C and a sintering duration of 8 hours. The crushing treatment was performed in an airflow mill.
(5) In the presence of water, the micron-sized solid electrolyte material was subjected to a nanometerization, to obtain a nanoscale solid electrolyte material with an average particle size D₅₀ of 148 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 2

(1) In the presence of a solvent, a Na source, an M¹ source, a Zr source, a Si source, and a P source were mixed to obtain a mixed material A. The solvent was water. The Na source was Na₂CO₃. The Zr source was ZrO₂. The Si source was SiO₂. The P source was NH₄H₂PO₄. The M¹ source was Y₂O₃. A ratio n(Na)/n(Si) of a molar amount of Na in the Na source to a molar amount of Si in the Si source was 1.65. Said mixing was performed in a ball mill mixer, and conditions of said mixing included: a rotation speed of 900 rpm and a duration of 6 hours. A solid content of the mixed material A at 25°C was 50wt%.
(2) A mixed material B containing the mixed material A, an organic monomer, an initiator, and a catalyst was heated for polymerization reaction, to obtain a precursor I of the solid electrolyte. The organic monomer was acrylamide. The initiator was (NH₄)₂S₂O₈. The catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.
(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 450°C and a pre-sintering duration of 2 hours. The crushing treatment was performed in a wall breaker. The precursor II of the solid electrolyte had an average particle size D₅₀ of 45 µm;
(4) The precursor II of the solid electrolyte was subjected to a sintering treatment and a crushing treatment in sequence, to obtain a micron-sized solid electrolyte material with an average particle size D₅₀ of 14 µm and a chemical formula of Na_{3.05}Zr_{1.95}Y_{0.05}Si₂PO₁₂. The sintering treatment was performed in a muffle furnace, and conditions of the sintering treatment included: a sintering temperature of 1,050°C and a sintering duration of 6 hours. The crushing treatment was performed in an airflow mill.
(5) In the presence of water, the micron-sized solid electrolyte material was subjected to a nanometerization, to obtain a nanoscale solid electrolyte material with an average particle size D₅₀ of 128 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 3

(1) In the presence of a solvent, a Na source, an M² source, a Zr source, a Si source, and a P source were mixed to obtain a mixed material A. The solvent was water. The Na source was Na₂CO₃. The Zr source was ZrO₂. The Si source was SiO₂. The P source was NH₄H₂PO₄. The M² source was Sc₂O₃. A ratio n(Na)/[n(Si)+n(M²)] of a molar amount of Na in the Na source to a sum of a molar amount of Si in the Si source and a molar amount of M² in the M² source was 1.65. Said mixing was performed in a ball mill mixer, and conditions of said mixing included: a rotation speed of 900 rpm and a duration of 6 hours. A solid content of the mixed material A at 25°C was 50wt%.
(2) A mixed material B containing the mixed material A, an organic monomer, an initiator, and a catalyst was heated for polymerization reaction, to obtain a precursor I of the solid electrolyte. The organic monomer was acrylamide, the initiator was (NH₄)₂S₂O_{8,} and the catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.
(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 400°C and a pre-sintering duration of 3 hours. The crushing treatment was performed in a wall breaker. The precursor II of the solid electrolyte had an average particle size D₅₀ of 46 µm.
(4) The precursor II of the solid electrolyte was subjected to a sintering treatment and a crushing treatment in sequence, to obtain a micron-sized solid electrolyte material with an average particle size D₅₀ of 14 µm and a chemical formula of Na_{3.05}Zr₂Si_{1.95}Sc_{0.05}PO₁₂. The sintering treatment was performed in a muffle furnace, and conditions of the sintering treatment included: a sintering temperature of 1,150°C and a sintering duration of 7 hours. The crushing treatment was performed in an airflow mill.
(5) In the presence of water, the micron-sized solid electrolyte material was subjected to a nanometerization, to obtain a nanoscale solid electrolyte material with an average particle size D₅₀ of 126 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 4

(1) In the presence of a solvent, a Na source, an M¹ source, an M² source, a Zr source, a Si source, and a P source were mixed to obtain a mixed material A. The solvent was water. The Na source was Na₂CO₃. The Zr source was ZrO₂. The Si source was SiO₂. The P source was NH₄H₂PO₄. The M¹ source was Y₂O₃. The M² source was Sc₂O₃. A ratio n(Na)/[n(Si)+n(M²)] of a molar amount of Na in the Na source to a sum of a molar amount of Si in the Si source and a molar amount of M² in the M² source was 1.65. Said mixing was performed in a ball mill mixer, and conditions of said mixing included: a rotation speed of 900 rpm and a duration of 6 hours. A solid content of the mixed material A at 25°C was 50wt%.
(2) A mixed material B containing the mixed material A, an organic monomer, an initiator, and a catalyst was heated for polymerization reaction, to obtain a precursor I of the solid electrolyte. The organic monomer was acrylamide, the initiator was (NH₄)₂S₂O_{8,} and the catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.
(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 550°C and a pre-sintering duration of 2 hours. The crushing treatment was performed in a wall breaker. The precursor II of the solid electrolyte had an average particle size D₅₀ of 42 µm.
(4) The precursor II of the solid electrolyte was subjected to a sintering treatment and a crushing treatment in sequence, to obtain a micron-sized solid electrolyte material with an average particle size D₅₀ of 12 µm and a chemical formula of Na_{3.1}Z_{1.95}Y_{0.05}Si_{1.95}Sc_{0.05}PO₁₂. The sintering treatment was performed in a muffle furnace, and conditions of the sintering treatment included: a sintering temperature of 1,100°C and a sintering duration of 8 hours. The crushing treatment was performed in an airflow mill.
(5) In the presence of water, the micron-sized solid electrolyte material was subjected to a nanometerization, to obtain a nanoscale solid electrolyte material with an average particle size D₅₀ of 125 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 5

(1) In the presence of a solvent, a Na source, an M¹ source, an M² source, a Zr source, a Si source, and a P source were mixed to obtain a mixed material A.

The solvent was water. The Na source was Na₂CO₃. The Zr source was ZrO₂. The Si source was SiO₂. The P source was NH₄H₂PO₄. The M¹ source was Y₂O₃. The M² source was Ga₂O₃. A ratio n(Na)/[n(Si)+n(M²)] of a molar amount of Na in the Na source to a sum of a molar amount of Si in the Si source and a molar amount of M² in the M² source was 1.65. Said mixing was performed in a ball mill mixer, and conditions of said mixing included: a rotation speed of 900 rpm and a duration of 6 hours. A solid content of the mixed material A at 25°C was 50wt%.

(2) A mixed material B containing the mixed material A, an organic monomer, an initiator, and a catalyst was heated for polymerization reaction, to obtain a precursor I of the solid electrolyte. The organic monomer was acrylamide, the initiator was (NH₄)₂S₂O_{8,} and the catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.

(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 500°C and a pre-sintering duration of 2 hours. The crushing treatment was performed in a wall breaker. The precursor II of the solid electrolyte had an average particle size D₅₀ of 44 µm.

(4) The precursor II of the solid electrolyte was subjected to a sintering treatment and a crushing treatment in sequence, to obtain a micron-sized solid electrolyte material with an average particle size D₅₀ of 12 µm and a chemical formula of Na_{3.1}Zr_{1.95}Y_{0.05}Si_{1.95}Ga_{0.05}PO₁₂. The sintering treatment was performed in a muffle furnace, and conditions of the sintering treatment included: a sintering temperature of 1,100°C and a sintering duration of 8 hours. The crushing treatment was performed in an airflow mill.

(5) In the presence of water, the micron-sized solid electrolyte material was subjected to a nanometerization, to obtain a nanoscale solid electrolyte material with an average particle size D₅₀ of 137 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 6

(1) In the presence of a solvent, a Na source, an M¹ source, an M² source, a Zr source, a Si source, and a P source were mixed to obtain a mixed material A.

The solvent was water. The Na source was Na₂CO₃. The Zr source was ZrO₂. The Si source was SiO₂. The P source was NH₄H₂PO₄. The M¹ source was Y₂O₃. The M² source was GeO₂. A ratio n(Na)/[n(Si)+n(M²)] of a molar amount of Na in the Na source to a sum of a molar amount of Si in the Si source and a molar amount of M² in the M² source was 1.65. Said mixing was performed in a ball mill mixer, and conditions of said mixing included: a rotation speed of 900 rpm and a duration of 6 hours. A solid content of the mixed material A at 25°C was 50wt%.

(2) A mixed material B containing the mixed material A, an organic monomer, an initiator, and a catalyst was heated for polymerization reaction, to obtain a precursor I of the solid electrolyte. The organic monomer was acrylamide, the initiator was (NH₄)₂S₂O_{8,} and the catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.

(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 500°C and a pre-sintering duration of 2 hours. The crushing treatment was performed in a wall breaker. The precursor II of the solid electrolyte had an average particle size D₅₀ of 44 µm.

(4) The precursor II of the solid electrolyte was subjected to a sintering treatment and a crushing treatment in sequence, to obtain a micron-sized solid electrolyte material with an average particle size D₅₀ of 12 µm and a chemical formula of Na_{3.05}Zr_{1.95}Y_{0.05}Si_{1.95}Ge_{0.05}PO₁₂. The sintering treatment was performed in a muffle furnace, and conditions of the sintering treatment included: a sintering temperature of 1,100°C and a sintering duration of 8 hours. The crushing treatment was performed in an airflow mill.

(5) In the presence of water, the micron-sized solid electrolyte material was subjected to a nanometerization, to obtain a nanoscale solid electrolyte material with an average particle size D₅₀ of 132 nm. The nanometerization included: sanding the micron-sized solid electrolyte material with water in a sand mill to obtain a nanoscale slurry having a solid content at 25°C of 50 wt%; then drying the nanoscale slurry; and grounding the dried product using an airflow mill. Conditions of said sanding included: a rotation speed of 1,000 r/min and a duration of 2 hours. Conditions of said drying included: a temperature of 60°C and a duration of 12 hours.

### Preparation Example 7

Preparation Example 7 was performed according to the method of Preparation Example 1. Preparation Example 7 differed from Preparation Example 1 in that step (5) was not omitted, and the others were the same. A micron-sized solid electrolyte material was prepared.

### Preparation Example 8

(1) In the presence of a solvent, a Na source, an M¹ source, a Zr source, a Si source, and a P source were mixed to obtain a mixed material A. The solvent was water. The Na source was Na₂CO₃. The Zr source was ZrO₂. The Si source was SiO₂. The P source was NH₄H₂PO₄. The M¹ source was La₂O₃. A ratio n(Na)/n(Si) of a molar amount of Na in the Na source to a molar amount of Si in the Si source was 1.65. Said mixing was performed in a ball mill mixer, and conditions of said mixing included: a rotation speed of 900 rpm and a duration of 6 hours. A solid content of the mixed material A at 25°C was 50wt%.
(2) A mixed material B containing the mixed material A, an organic monomer, an initiator, and a catalyst was heated for polymerization reaction, to obtain a precursor I of the solid electrolyte. The organic monomer was acrylamide, the initiator was (NH₄)₂S₂O_{8,} and the catalyst was N,N,N',N'-tetramethylethylenediamine (TEMED). A mass ratio of the mixed material A to the organic monomer was 1: 0.55. A mass ratio of the organic monomer, the initiator, and the catalyst was 1: 1: 1. The mixed material B was obtained by adding the organic monomer, the initiator, and the catalyst into the mixed material A and performing stirring and dispersion treatment. The polymerization reaction was performed in an air drying oven, and conditions of the polymerization reaction included: a polymerization temperature of 100°C and a polymerization duration of 12 hours.
(3) The precursor I of the solid electrolyte was subjected to a pre-sintering treatment and a crushing treatment in sequence, to obtain a precursor II of the solid electrolyte. The pre-sintering treatment was performed in a muffle furnace, and conditions of the pre-sintering included: a pre-sintering temperature of 450°C and a pre-sintering duration of 2 hours. The crushing treatment was performed in a wall breaker. The precursor II of the solid electrolyte had an average particle size D₅₀ of 43 µm.
(4) The precursor II of the solid electrolyte was subjected to a sintering treatment and a crushing treatment in sequence, to obtain a micron-sized solid electrolyte material with an average particle size D₅₀ of 10 µm and a chemical formula of Na_{3.05}Zr_{1.95}La_{0.05}Si₂PO₁₂. The sintering treatment was performed in a muffle furnace, and conditions of the sintering treatment included: a sintering temperature of 1,050°C and a sintering duration of 6 hours. The crushing treatment was performed in an airflow mill.

### Comparative Preparation Example 1

(1) A Na source, a Zr source, a Si source, and a P source were mixed to obtain a mixed material. The Na source was Na₂CO₃. The Zr source was ZrO₂. The Si source was SiO₂. The P source was NH₄H₂PO₄. A ratio n(Na)/n(Si) of a molar amount of Na in the Na source to a molar amount of Si in the Si source was 1.65. Said mixing was performed in a ball mill mixer, and conditions of said mixing included: a rotation speed of 900 rpm and a duration of 6 hours.
(2) The mixed material was subjected to a pre-sintering treatment and a crushing treatment in sequence, to obtain a precursor of the solid electrolyte. The pre-sintering treatment was performed in a muffle furnace, and conditions of the pre-sintering included: a pre-sintering temperature of 700°C and a pre-sintering duration of 2 hours. The crushing treatment was performed in a wall breaker. The precursor of the solid electrolyte had an average particle size D₅₀ of 45 µm.
(3) The precursor of the solid electrolyte was subjected to a sintering treatment and a crushing treatment in sequence, to obtain a micron-sized solid electrolyte material with an average particle size D₅₀ of 15 µm and a chemical formula of Na₃Zr₂Si₂PO₁₂. The sintering treatment was performed in a muffle furnace, and conditions of the sintering treatment included: a sintering temperature of 1,050°C and a sintering duration of 8 hours. The crushing treatment was performed in an airflow mill.

### Test Example 1

(a) The solid electrolyte materials prepared in the preparation examples and the comparative preparation examples were respectively blended with a polymer and a sodium salt, to obtain a mixture. The amount of the solid electrolyte material was 8 g. The polymer was polyethylene oxide (PEO), and the amount thereof was 69 g. The sodium salt was NaTFSI, and the amount thereof was 23 g. Conditions of said kneading included: a kneading temperature of 85°C, a rotation speed of 500 rpm, and said kneading being performed until a torque of a kneading machine reached a steady state.
(b) The mixture was placed on a heating table of a flat plate heat press for a heat pressing treatment, to obtain a solid electrolyte membrane with a thickness of 20 µm. Conditions of the heat pressing treatment included: a heat pressing temperature of 70°C, a heat pressing pressure of 3 MPa, and a heat pressing duration of 20 minutes.

The above-mentioned solid electrolyte membrane was punched into a disc with a diameter of 22 mm, and vacuum dried at 60°C for 12 hours. In a glove box with an H₂O content <1 ppm and an O₂ content <1 ppm, a cathode casing, a stainless steel sheet I (with a diameter of 18 mm and a thickness of 1 mm), the solid electrolyte membrane, a stainless steel sheet II (with a diameter of 18 mm and a thickness of 1 mm), nickel foam, and an anode casing were assembled in such an order, and sealed at 450 MPa pressure, to obtain a test assembly. The test assembly was heated at 65°C for 12 hours for chemical activation, and then charged at 1.3 mA for 5 minutes, left to stand for 3 minutes, discharged at 1.3 mA for 5 minutes, and left to stand for 3 minutes. The above-mentioned charge and discharge step was repeated 3 times for electrochemical activation, to obtain a sample for an ionic conductivity test.

The obtained sample for the ionic conductivity test was placed in the electrochemical workstation to test the alternating-current impedance at room temperature. The test conditions were: a disturbance voltage ranging from 5 mV to 10 mV and a scanning frequency ranging from 1 Hz to 1 MHz. Based on the impedance data obtained from the test, the ionic conductivity corresponding to the sample was calculated in accordance with the formula σ=L/(R·S), where: σ is the ionic conductivity, in the unit of S/cm; L is the thickness of the solid electrolyte membrane after the test assembly was disassembled, in the unit of cm; R is the impedance value, in the unit of Ω; and S is the area of the solid electrolyte membrane, in the unit of cm²). The results were shown in Table 1.

### Test Example 2

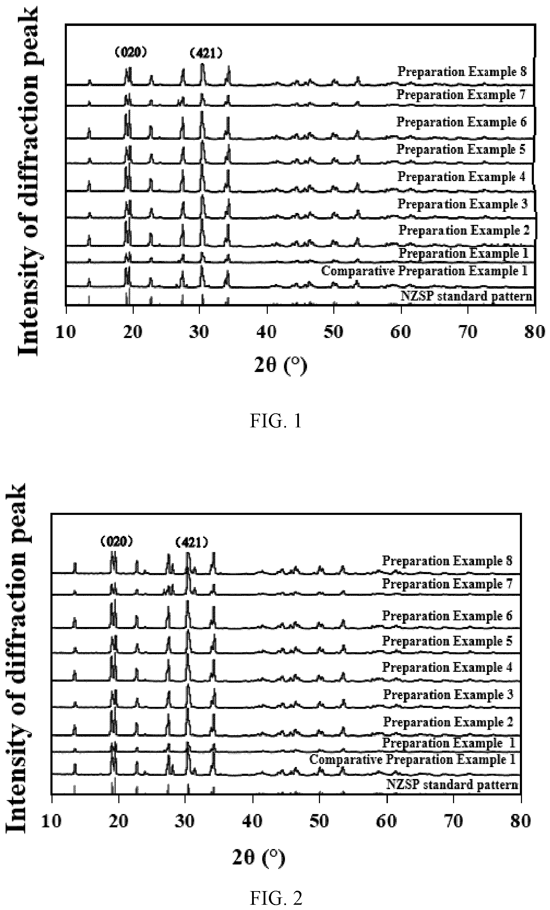

10 g of the solid electrolyte materials obtained in the preparation examples and the comparative preparation examples were placed in 90 g of boiling water at 100°C, respectively, and stirred for 2 hours. The samples, after stirring, were evaporated and dried, and then subjected to an XRD test. Table 1 lists the ratio I(₀₂₀)/I(₄₂₁) of the peak intensity I(₀₂₀) of the (020) crystal plane to the peak intensity I(₄₂₁) of the (421) crystal plane obtained by XRD, the ratio A₍₀₂₀₎/A₍₄₂₁₎ of the peak area A(₀₂₀) of the (020) crystal plane to the peak area A(₄₂₁) of the (421) crystal plane obtained by XRD, and test results of the structural stability. FIG. 1 illustrates XRD patterns of the solid electrolyte materials obtained in the preparation examples and the comparative preparation examples. FIG. 1 illustrates XRD patterns of the solid electrolyte materials obtained in the preparation examples and the comparative preparation examples after an abuse test.

A main body of the sample of the solid electrolyte material obtained in Preparation Example 1 was a pure phase, and a small amount of sodium phosphate impurity phase appeared at positions of diffraction angles 2θ=28° and 2θ=32°. The sample was free of impurity phase after the abuse treatment, indicating that the sample had good structural stability.

The solid electrolyte material obtained in Preparation Example 2 was a pure phase. After the abuse treatment, the sample was substantially free of impurity phase, indicating that the sample had good structural stability.

The solid electrolyte materials obtained in Preparation Example 3 to Preparation Example 6 were each a pure phase, and the samples were free of impurity phase after the abuse treatment, indicating that the sample had excellent structural stability.

A main body of the sample of the micron-sized solid electrolyte material obtained in Preparation Example 7 was a pure phase, and a small amount of sodium phosphate impurity phase appeared at positions of diffraction angles 2θ=26° and 2θ=28°. After the abuse treatment, a peak intensity of the sodium phosphate impurity phase at the positions of diffraction angles 2θ=26° and 2θ=28° became higher, and a large amount of zirconium oxide impurity phase appeared at the position of diffraction angle 2θ=32°, indicating that the sample had undergone phase transformation and had poor structural stability.

A main body of the sample of the micron-sized solid electrolyte material obtained in the comparative preparation example 1 was a pure phase, and a small amount of sodium phosphate impurity phase appeared at the positions of diffraction angles 2θ=26° and 2θ=28°. After the abuse treatment, the peak intensity of the sodium phosphate impurity phase at positions of diffraction angles 2θ=26° and 2θ=28° became higher, and a large amount of zirconium oxide impurity phase appeared at the position of diffraction angle 2θ=32°, indicating that the sample had undergone phase transformation and had poor structural stability.

A main body of the sample of the micron-sized solid electrolyte material obtained in Preparation Example 8 was a pure phase; and after the abuse treatment, a large amount of zirconium oxide impurity phase appeared at the position of diffraction angle 2θ=32°, indicating that the sample had undergone phase transformation and poor structural stability.

**[Table 1]**

| Item | I₍₀₂₀₎/I₍₄₂₁₎ | A₍₀₂₀₎/A₍₄₂₁₎ | Ionic | Stability of phase |
|---|---|---|---|---|
| Unit | / | / | S/cm | / |
| Preparation Example 1 | 0.963 | 0.46 | 1.3×10⁻⁴ | with impurity phase, but stable |
| Preparation Example 2 | 0.985 | 0.47 | 5.2×10⁻⁴ | pure phase and stable |
| Preparation Example 3 | 0.975 | 0.47 | 7.6×10⁻⁴ | pure phase and stable |
| Preparation Example 4 | 0.993 | 0.52 | 9.5×10⁻⁴ | pure phase and stable |
| Preparation Example 5 | 0.986 | 0.49 | 8.3×10⁻⁴ | pure phase and stable |
| Preparation Example 6 | 0.992 | 0.49 | 5.1×10⁻⁴ | pure phase and stable |
| Preparation Example 7 | 0.966 | 0.46 | 8.5×10⁻⁵ | Impure and unstable |
| Preparation Example 8 | 0.967 | 0.45 | 9.3×10⁻⁵ | pure phase, but unstable |
| Comparative Preparation Example 1 | 0.934 | 0.44 | 3.7×10⁻⁵ | with impurity phase, and unstable |

The examples were provided to explain the cathode material and the method for preparing the cathode material according to the present disclosure.

### Example 1

S1: The nanoscale solid electrolyte material prepared in Preparation Example 1 was mixed with a cathode active substance in a high-speed mixer, to obtain a mixed material. The cathode active substance was an O3-type layered oxide NaNi_{1/3}Fe_{1/3}Mn_{1/3}O₂. A mass ratio of the nanoscale solid electrolyte material to the cathode active substance was 0.8: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 500°C and a duration of 6 hours.

### Example 2

S1: The nanoscale solid electrolyte material prepared in Preparation Example 2 was mixed with a cathode active substance in a high-speed mixer, to obtain a mixed material. The cathode active substance was a P2-type layered oxide Na_{2/3}Ni_{1/3}Mn_{1/2}O₂. A mass ratio of the nanoscale solid electrolyte material to the cathode active substance was 0.5: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 750°C and a duration of 12 hours.

### Example 3

S1: The nanoscale solid electrolyte material prepared in Preparation Example 3 was mixed with a cathode active substance in a high-speed mixer, to obtain a mixed material. The cathode active substance was an O3-type layered oxide NaNi_{1/3}Fe_{1/3}Mn_{1/3}O₂. A mass ratio of the nanoscale solid electrolyte material to the cathode active substance was 0.5: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 550°C and a duration of 6 hours.

### Example 4

S1: The nanoscale solid electrolyte material prepared in Preparation Example 4 was mixed with a cathode active substance in a high-speed mixer, to obtain a mixed material. The cathode active substance was an O3-type layered oxide NaNi_{1/3}Fe_{1/3}Mn_{1/3}O₂. A mass ratio of the nanoscale solid electrolyte material to the cathode active substance was 0.6: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 450°C and a duration of 10 hours.

### Example 5

S1: The nanoscale solid electrolyte material prepared in Preparation Example 5 was mixed with a cathode active substance in a high-speed mixer, to obtain a mixed material. The cathode active substance was a P2-type layered oxide Na_{2/3}Ni_{1/3}Mn_{1/2}O₂. A mass ratio of the nanoscale solid electrolyte material to the cathode active substance was 0.6: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 450°C and a duration of 10 hours.

### Example 6

S1: The nanoscale solid electrolyte material prepared in Preparation Example 6 was mixed with a cathode active substance in a high-speed mixer, to obtain a mixed material. The cathode active substance was a P2-type layered oxide Na_{2/3}Ni_{1/3}Mn_{1/2}O₂. A mass ratio of the nanoscale solid electrolyte material to the cathode active substance was 0.6: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 450°C and a duration of 10 hours.

### Example 7

S1: The nanoscale solid electrolyte material prepared in Preparation Example 7 was mixed with a cathode active substance in a high-speed mixer, to obtain a mixed material. The cathode active substance was an O3-type layered oxide NaNi_{1/3}Fe_{1/3}Mn_{1/3}O₂. A mass ratio of the nanoscale solid electrolyte material to the cathode active substance was 0.8: 100.

S2: The obtained mixed material was subjected to a heat treatment in an oxygen furnace, to obtain a cathode material. In the cathode material, the nanoscale solid electrolyte material was coated on the surface of the cathode active substance. The conditions of the heat treatment included: a temperature of 500°C and a duration of 6 hours.

### Example 8

S1: The micron-sized solid electrolyte material prepared in Preparation Example 8 was mixed with a cathode active substance in a high-speed mixer, to obtain a mixed material. The cathode active substance was a P2-type layered oxide Na_{2/3}Ni_{1/3}Mn_{1/2}O₂. A mass ratio of the micro-sized solid electrolyte material to the cathode active substance was 0.5: 100.

S2: The obtained mixed material was subjected to a heat treatment in an oxygen furnace, to obtain a cathode material. In the cathode material, the micro-sized solid electrolyte material was coated on the surface of the cathode active substance. The conditions of the heat treatment included: a temperature of 750°C and a duration of 12 hours.

### Comparative Example 1

The cathode active substance (O3-type layered oxide NaNi_{1/3}Fe_{1/3}Mn_{1/3}O₂) was subjected to a heat treatment in an oxygen furnace, to obtain a cathode material. Conditions of the heat treatment included: a temperature of 850°C and a duration of 8 hours.

### Comparative Example 2

The cathode active substance (P2-type layered oxide Na_{2/3}Ni_{1/3}Mn_{1/2}O₂) was subjected to a heat treatment in an oxygen furnace, to obtain a cathode material. Conditions of the heat treatment included: a temperature of 900°C and a duration of 6 hours.

### Comparative Example 3

S1: The micro-sized solid electrolyte material prepared in Comparative Preparation Example 1 was mixed with a cathode active substance in a high-speed mixer, to obtain a mixed material. The cathode active substance was an O3-type layered oxide NaNi_{1/3}Fe_{1/3}Mn_{1/3}O₂. A mass ratio of the micro-sized solid electrolyte material to the cathode active substance was 0.8: 100.

S2: The obtained mixed material was subjected to a heat treatment in an oxygen furnace, to obtain a cathode material. In the cathode material, the micro-sized solid electrolyte material was coated on the surface of the cathode active substance. The conditions of the heat treatment included: a temperature of 750°C and a duration of 12 hours.

### Test Example 3

5 g of the cathode materials obtained in the examples and the comparative examples were weighed, respectively, put into 95 g of deionized water M_{water} at room temperature, and stirred for 5 minutes. A slurry obtained after stirring was filtered through a Buchner funnel with filter paper, to obtain a filtrate with a mass of M_{filtrate}. The obtained filtrate was titrated in a Metrohm 888 potentiometric titrator at room temperature to obtain a titration curve. The equivalent point value EPₓ=Vₓ, (x=1,2,3···) in the titration curve was recorded. The results were shown in Table 2.

### Test Example 4

The cathode materials obtained in the examples and the comparative examples were respectively mixed with conductive carbon black, PVDF, and NaTFSI according to a mass ratio of 90:3:5:2, and an appropriate amount of NMP was added. After stirring evenly, the mixture was scraped and applied onto an aluminum foil, dried in an air oven at 120°C for 1 hour, and punched into a positive electrode plate with a diameter of 11 mm.

69 g of PEO and 23 g of NaTFSI were dissolved in acetonitrile and stirred for 12 hours. The obtained slurry was cast into a polytetrafluoroethylene mold and dried in a 50°C oven under vacuum for 10 hours. The obtained product was placed in a heat press and subjected to a heat pressing treatment for 5 minutes. The product was then taken out and punched into a disc-shaped PEO electrolyte membrane with a diameter of 19 mm.

In an argon-filled glove box with a water content and an oxygen content that were both smaller than 5 ppm, a negative electrode plate (lithium metal), the prepared positive electrode plate, and the PEO electrolyte membrane were assembled into a 2025 button cell. The battery was subjected to a charge and discharge capacity test at 2.0V to 4.2V, 0.1C, at 60°C. The battery was charged and discharged for 50 times at 2.0V to 4.2V, 1C, at 60°C, to test charge and discharge cycle performance thereof. The results were shown in Table 2.

### Test Example 5

The cathode materials obtained in the examples and the comparative examples were respectively mixed with acetylene black and polyvinylidene fluoride (PVDF) according to a mass ratio of 95:2.5:2.5, and an appropriate amount of NMP was added. After stirring evenly, the mixture was scraped and applied onto an aluminum foil, dried in an air oven at 120°C for 1 hour, and punched into a positive electrode plate with a diameter of 12 mm and a thickness of 120 µm under a pressure of 100 MPa. Then, the positive electrode plate was placed in a 120°C oven under vacuum to dry for 12 hours. Carbon black was used as a negative electrode plate. A polyethylene porous membrane with a thickness of 25 µm was used as a separator. A mixture of equivalent amounts of 1mol/L LiPF₆, ethylene carbonate (EC), and propylene carbonate (PC) was used as an electrolyte. In an argon-filled glove box with a water content and an oxygen content that were both smaller than 5 ppm, the positive electrode plate, the separator, the negative electrode plate, and the electrolyte were assembled into a 2025 button cell.

The above-mentioned button battery was charged and discharged twice at 2.0 V to 4.2 V, 0.2 C, at 60°C. The, when the battery was fully charged, the battery was disassembled to obtain the positive electrode plate. The positive electrode plate was placed in a differential thermal-thermogravimetric tester for testing, to obtain a DSC curve corresponding to the sample. The results were shown in Table 2.

**[Table 2]**

| Item | Titration potential | DSC peak position | 0.1C discharge specific capacity | Cycle retention rate at 1C for 50 cycles |
|---|---|---|---|---|
| Unit | pH | °C | mAh/g | % |
| Comparative Example 1 | 4.6, 8.5 | 291 | 172 | 90.2 |
| Comparative Example 2 | 4.5, 8.3 | 282 | 102 | 90 |
| Comparative Example 3 | 4.8, 8.1, 9.0 | 300 | 173 | 90.8 |
| Example 1 | 6.1, 7.6, 9.0 | 304 | 175 | 91.3 |
| Example 2 | 4.4, 6.1, 8.9 | 293 | 105 | 91.2 |
| Example 3 | 4.5, 6.7, 9.1 | 308 | 178 | 92 |
| Example 4 | 4.3, 7.1, 8.9 | 310 | 180 | 92.5 |
| Example 5 | 4.9, 7.2, 8.8 | 294 | 105 | 91.8 |
| Example 6 | 4.6, 6.9, 8.8 | 298 | 108 | 92.2 |
| Example 7 | 6.2, 7.5, 9.1 | 299 | 171 | 90.8 |
| Example 8 | 4.5, 8.1, 8.6 | 290 | 103 | 90.5 |

The above results reveal that the solid electrolyte material according to the present disclosure has high ion conductivity and stable structure. The zirconium oxide impurity phase in the micron-sized solid electrolyte material obtained in Comparative Preparation Example 1 may affect the grain boundary impedance and results in poor structural stability. After the micron-sized solid electrolyte material obtained in Comparative Preparation Example 1 was coated on the surface of the cathode active substance, the presence of the impurity phase may hinder transmission of the sodium ions and thus may affect the electrochemical performances of the obtained cathode material.

Although the micron-sized solid electrolyte material obtained in Preparation Example 8 was doped with element La, the elements and the main phase were not evenly mixed at the atomic level, and the zirconium oxide impurity phase appeared after the abuse treatment, which affects the grain boundary impedance, thereby leading to poor structural stability. After the micron-sized solid electrolyte material obtained in Preparation Example 8 was coated on the surface of the cathode active substance, the presence of the impurity phase may hinder the transmission of the sodium ions and thus may affect the electrochemical performances of the cathode material.

The preferred embodiments of the present disclosure are described in detail above. However, the present disclosure is not limited thereto. Without departing from the scope of technical conception of the present disclosure, a variety of simple variations may be made to the technical solutions of the present disclosure, including the combination of various technical features in any other suitable manner. These simple variations and combinations shall be regarded as the contents disclosed by the present disclosure, and all of them shall fall within the scope of protection of the present disclosure.

## Claims

1. A solid electrolyte material, wherein:
a ratio of a peak intensity I₍₀₂₀₎ of a (020) crystal plane to a peak intensity I(₄₂₁) of a (421) crystal plane obtained by X-ray Diffraction (XRD) of the solid electrolyte material satisfies 0.9≤I₍₀₂₀₎/I₍₄₂₁₎<1; and
a ratio of a peak area A(₀₂₀) of the (020) crystal plane to a peak area A(₄₂₁) of the (421) crystal plane obtained by XRD of the solid electrolyte material satisfies 0.45≤A₍₀₂₀₎/A₍₄₂₁₎<1.

2. The solid electrolyte material according to claim 1, wherein: 0.97≤I₍₀₂₀₎/I₍₄₂₁₎<1; and preferably, 0.46≤A₍₀₂₀₎/A₍₄₂₁₎<1.

3. The solid electrolyte material according to claim 1 or 2, wherein the solid electrolyte material has a structure represented by Formula I:
Na*₃₊ₓ*[Zr*_{2-y}*M¹*_{y}*][Si*_{2-z}*M²*_{z}*]PO₁₂ Formula I,
where: 0≤*x*<1.15, 0≤*y*≤0.5*,* 0≤*z*≤1; M¹ is at least one of Mg, La, Y, Al, and Ca; and M² is at least one of Ga, In, Ge, and Sc.

4. The solid electrolyte material according to any one of claims 1 to 3, wherein:
the solid electrolyte material has an average particle size D₅₀ ranging from 5 nm to 500 nm, and preferably, from 100 nm to 200 nm; and
preferably, the solid electrolyte material has an ionic conductivity greater than 8×10⁻⁵ S/cm, and preferably, greater than 1×10⁻⁴ S/cm.

5. A method for preparing the solid electrolyte material according to any one of claims 1 to 4, comprising:
(1) mixing a Na source, a Zr source, a Si source, and a P source in the presence of a solvent, to obtain a mixed material A, optionally, the mixed material A further containing an M¹ source and/or an M² source;
(2) heating a mixed material B for polymerization reaction, to obtain a precursor I of the solid electrolyte, the mixed material B containing the mixed material A, an organic monomer, an initiator, and a catalyst;
(3) sequentially performing a pre-sintering treatment and a crushing treatment on the precursor I of the solid electrolyte, to obtain a precursor II of the solid electrolyte; and
(4) sequentially performing a sintering treatment and a crushing treatment on the precursor II of the solid electrolyte.

6. The method according to claim 5, wherein:
in step (1), the solvent is selected from at least one of water, N-methyl-2-pyrrolidone, phthalate ester, dibasic ester, long-chain alcohol, and pyrrolidone;
preferably, in step (1), the M¹ source and the M² source are each independently selected from at least one of an oxide, a hydroxide, a nitrate, an oxalate, an organic alcoholate, and a carbonate that contain M¹ and/or M²;
preferably, in step (1), a ratio n(Na)/n(Si) of a molar amount of Na in the Na source to a molar amount of Si in the Si source ranges from 1.65 to 1.725; when the mixed material A further contains an M² source, a ratio n(Na)/[n(Si)+n(M²)] of the molar amount of Na in the Na source to a sum of the molar amount of Si in the Si source and a molar amount of M² in the M² source ranges from 1.65 to 1.725; and
preferably, in step (1), the mixed material A has a solid content ranging from 40 wt% to 60 wt% at 25°C.

7. The method according to claim 5 or 6, wherein:
in step (2), the organic monomer is selected from at least one of acrylamide, methylenebisacrylamide, styrene, butadiene, and methyl methacrylate;
preferably, in step (2), the initiator is selected from at least one of benzoyl peroxide, (NH₄)₂S₂O_{8,} and K₂S₂O₈;
preferably, in step (2), the catalyst is N,N,N',N'-tetramethylethylenediamine;
preferably, in step (2), a mass ratio of the mixed material A to the organic monomer is 1: (0.5 to 0.6);
preferably, in step (2), a mass ratio of the organic monomer, the initiator, and the catalyst is 1: (0.5 to 1.5): (0.5 to 1.5); and
preferably, in step (2), conditions of the polymerization reaction comprise: a polymerization temperature ranging from 80°C to 200°C and a polymerization duration ranging from 10 hours to 15 hours.

8. The method according to any one of claims 5 to 7, wherein:
in step (3), conditions of the pre-sintering treatment comprise: a pre-sintering temperature ranging from 300°C to 700°C and a pre-sintering duration ranging from 2 hours to 6 hours;
preferably, in step (3), the precursor II of the solid electrolyte has an average particle size D₅₀ ranging from 1 µm to 50 µm, and preferably, from 40 µm to 50 µm;
preferably, in step (4), conditions of the sintering treatment comprise: a sintering temperature ranging from 1,000°C to 1,200°C and a sintering duration ranging from 4 hours to 10 hours; and
preferably, the method further comprises: performing, in the presence of water, a nanometerization on a product obtained by the crushing treatment in step (4), to obtain a nanoscale solid electrolyte material.

9. A solid electrolyte, comprising:
the solid electrolyte material according to any one of claims 1 to 4,
a polymer, and
a sodium salt.

10. The solid electrolyte according to claim 9, wherein:
the polymer is selected from at least one of polyvinylidene fluoride, polytetrafluoroethylene, vinylidene fluoride-hexafluoropropylene copolymer, polyethylene oxide, polydimethylsiloxane, polymethyl methacrylate, polypropylene carbonate, polyvinyl carbonate, and polycaprolactone;
preferably, the sodium salt is selected from at least one of sodium bis(trifluoromethanesulfonyl)imide (NaTFSI), sodium hexafluorophosphate, sodium perchlorate, and sodium trifluoromethanesulfonate;
preferably, based on a total mass of the solid electrolyte, a content of the solid electrolyte material ranges from 5 wt% to 30 wt%, a content of the polymer ranges from 50 wt% to 75wt%, and a content of the sodium salt ranges from 15 wt% to 30wt%; and
preferably, the solid electrolyte has a membrane structure, the membrane structure having a thickness ranging from 5 µm to 200 µm, and preferably from 20 µm to 100 µm.

11. A method for preparing the solid electrolyte according to claim 9 or 10, comprising:
(a) obtaining a mixture by kneading a solid electrolyte material, a polymer, and a sodium salt; and
(b) performing a heat pressing treatment on the mixture.

12. The method according to claim 11, wherein:
conditions of the kneading in step (a) comprise: a kneading temperature ranging from 0.5 Tₘ to 1.5 Tₘ, where Tₘ represents a softening temperature of the polymer; and a rotation speed ranging from 300 rpm to 500 rpm; and
preferably, conditions of the heat pressing treatment in step (b) comprise: a heat pressing temperature ranging from 60°C to 80°C, a heat pressing pressure ranging from 1 MPa to 10 MPa, and a heat pressing duration ranging from 5 minutes to 20 minutes.

13. A cathode material, comprising:
a cathode active substance; and
a solid electrolyte material coated on a surface of the cathode active substance, the solid electrolyte material being the solid electrolyte material according to any one of claims 1 to 4.

14. The cathode material according to claim 13, wherein:
a mass ratio of the solid electrolyte material to the cathode active substance is (0.05 to 1): 100, and preferably, (0.5 to 0.8): 100; and
preferably, the cathode active substance is at least one of NaNi_{1/3}Fe_{1/3}Mn_{1/3}O₂, Na_{2/3}Ni_{1/3}Mn_{1/2}O₂, and a layered oxide cathode material derived therefrom.

15. The cathode material according to claim 13 or 14, wherein:
the cathode material has a characteristic titration peak at pH ranging from 5 to 8 during an acid-base titration treatment; and
preferably, in a differential scanning calorimetry analysis spectrum of the cathode material, an onset temperature of a main exothermic peak is greater than or equal to 290°C.

16. A method for preparing the cathode material according to any one of claims 13 to 15, the method comprising:
performing a heat treatment on a mixed material containing a solid electrolyte material and a cathode active substance at a temperature ranging from 300°C to 750°C, wherein the solid electrolyte material is the solid electrolyte material according to any one of claims 1 to 4.

17. The method according to claim 16, wherein:
the temperature of the heat treatment ranges from 400°C to 750°C; and
a duration of the heat treatment ranges from 2 hours to 12 hours, and preferably, from 5 hours to 12 hours.

18. A sodium-ion battery, comprising:
the solid electrolyte material according to any one of claims 1 to 4; or
the cathode material according to any one of claims 13 to 15.
